# EUROPEAN PATENT SPECIFICATION

(11) **EP 0 667 106 B1**
(45) Date of publication and mention of the grant of the patent: **06.10.1999**
(21) Application number: 94120653.4
(22) Date of filing: 24.12.1994
(51) Int. Cl.: A23L 1/105, A23L 1/212, A23L 1/214, A23C 9/13, A23L 1/24, A23L 2/52, A23P 1/16

(54) **Process for making an acidic amylaceous fermented composition and for reducing the fermented milk and/or fruit content in foodstuffs**
Verfahren zur Herstellung von einer säurenfermentierten stärkehaltigen Zusammensetzung und zur Reduzierung von dem fermentierten Milchproduktgehalts und/oder Obstgehalts eines Nahrungsmittels
Procédé de fabrication d'une composition amylacée acide fermentée et pour réduire la quantité de produit laitier fermenté ou/et de fruit d'un aliment

(30) Priority: 13.01.1994 EP 94100411
(43) Date of publication of application: 16.08.1995
(73) Proprietor: SOCIETE DES PRODUITS NESTLE S.A., 1800 Vevey (CH)
(72) Inventor: King Solis, Luis Roberto, Quito (EC); Penaloza Izurieta, Walter, Quito (EC)
(74) Representative: Vuille, Roman

(56) References cited:
- EP-A- 0 667 106
- WO-A-91/17672
- GB-A- 2 092 878
- PATENT ABSTRACTS OF JAPAN vol. 12 no. 176 (C-498) ,25 May 1988 & JP-A-62 285771 (NORIO MIHARA)

## Description

The invention relates to a new process for reducing either simultaneously or separately the content of fermented milk products and/or fruit material in foodstuffs containing fermented milk products and/or fruit material.

Following the evolution of consumers tastes or their needs, or based on mere economical reasons such as lowering manufacture costs, the food industry is permanently looking for new natural and acceptable food materials. These new materials can consist to either newly discovered ingredients or new mixtures of, at least partially, prior known food ingredients.

Fermented milk products are widely used and appreciated by the consumers, but in some countries where agriculture or milk industry is deficient shortage or high prices can be an obstacle. To ensure an adequate supply of similar food products which will keep their main characteristics such as taste, viscosity or appearance, despite a reduced content of fermented milk products, the man in the art has to develop new solutions.

Although lactic fermentation is known since long, its mains use is dairy food products. In a few cases, however, lactic fermentation was also applied to non-dairy products such as cereals or cereal based food materials.

WO-A- 91/17672 discloses a food product containing dietary fiber and a method for making same. This method comprises lactic fermentation, based substantially on cereal bran, and leads to a presumed nutritionally beneficial and tasty product which further contains living microorganisms. The method provides more specifically an easy-to-use fiber rich food product including a significant amount of living Lactobacilli. Obviously, such a product would not cope with the aim of the invention.

GB-A-2092878 refers to a process for producing African native beer which comprises fermenting a liquid cereal extract to which has been added dairy whey. The resulting beverage, once conveniently sterilized and packed, is then used as such: it is defined as nourishing, non-alcoholic, pleasant tasting, shelf-stable and refreshing.

There is in fact no indication or suggestion that such solid or liquid food products would meet the goals defined here above.

The invention precisely provides one of these new and original solutions the food industry is looking for, when proposing to make use of an acidic amylaceous fermented composition based on various cereal flours and other starch materials.

It has been surprisingly discovered that one can easily and cheaply reduce either simultaneously or separately the content of fermented milk products and/or fruit material in a wide range of foodstuffs essentially based on said fermented milk products or fruit material according to their initial recipe, without affecting their genuine characteristics.

Therefore, the object of the present invention is a process for reducing either simultaneously or separately the content of fermented milk products and/or fruit material in foodstuffs containing fermented milk products and/or fruit material, wherein
a) a slurry of cereal flour and at least one additional non-cereal starch material is first subjected to gelatinization and further homogenized;
b) inoculated with an acidifying strain or a mixture of acidifying strains selected from Lactobacillus species, Streptococcus thermophilus and Bifidobacterium species;
c) then subjected to a fermentation over a period and at a temperature such as to afford a pH of about 3.5 to 4.2 of the fermented material;
d) then sterilized; and
e) substituting the sterilized material for at least a portion of fermented milk product and/or fruit material during the preparation of the foodstuffs.

According to the present invention, as cereal flour subjected to acidic fermentation one can advantageously use rice flour, wheat flour, oat flour or barley flour e.g., or any mixture thereof depending on the nature of the final product. Rice flour is preferred as leading to a fermented material having a neutral taste.

According to the invention there is also used a non-cereal starch material such as potato starch or manioc starch. When subjected to the various treatments which are described here after, such non-cereal starch material provides the desired smoothness, thickness and stability of the fermented material.

Relative proportions of cereal flour and non-cereal starch material will greatly depend on the nature and quality of the final product to mix with. It is the task of the man in the art to select the most appropriate kinds of ingredients and their relative proportions to reach the desired effect in most cases this can be done based on routine trials.

The gelatinization of the selected flour cereal and non-cereal starch material can be effected according to the conventional techniques, steam heating e.g. Homogenization of the gelatinized mixture is preferably carried out using wet-milling devices.

According to the invention the homogenized starch and cereal material is then subjected to a fermentation making use of specific acidifying strains or mixture of strains, more particularly strains selected from various Lactobacillus species or Streptococcus thermophilus, or even Bifidobacterium species.

As Lactobacillus species useful in accordance with the invention one can use conveniently strains selected from L. acidophilus, L. casei, L. plantarum, L. delbrueckii, L. brevis, L. pentosus, L. mesenteroides and L. bulgaricus.

If it is desired, mixtures of two distinct Lactobacillus species can also be used, for example L. plantarum and L. casei, or even two distinct subspecies of the same Lactobacillus species such as L. plantarum e.g.

The fermentation can also be performed using one Lactobacillus species, L. Casei for example, together with one or several non-Lactobacillus species such as Streptococcus thermophillus or a Bifidobacterium species.

Bifidobacterium bifidus species proved very convenient in the preparation of infant food based on fruit material, when combined with specific Lactobacillus species. Several mixtures of various strains are disclosed as preferred mixtures in the examples provided here after.

As various strains or mixtures of strains can behave differently during fermentation and then lead to a wide range of distinct final fermented materials, the man in the art will have to select them in view of the goal to achieve. This selection would obviously depend on the kind of material to replace, the taste, the acidity or the sweetness one wishes to maintain in the final food product, or the viscosity for example.

According to the invention the fermentation can be performed using conventional techniques. It will be carried out over a period and within a temperature range suitable to keep the selected strains active and in such a way to achieve a well controlled pH value of the fermented material. Final pH of said fermented material is indeed one of the critical parameters of the composition of the invention depending on the final use which is intended for : replacing fermented milk products or fruit material.

The fermented material is sterilized before use, pasteurization is convenient therfor.

Other parameters will also be controlled when considering the solid, semi-solid or liquid state of the selected foodstuff. Thus, dry matter content, taste, smell or colour will further condition appropriate use of the fermented cereal material

Preferred fermented material used for replacing either fermented milk products or fruit material, or both, in solid or semi-solid foodstuffs can be characterized as having a pH of about 3.8 to 4.0 and further characterized by a dry matter content of about 12 to 16 weight %, a total acidity of about 0.42 to 0.49 weight % expressed as lactic acid content and a consistency of about 13 to 17 cm/15 s at 20°C.

An other preferred fermented material useful for analogous purpose can be characterized as having a pH of about 4.0 to 4.2 and further characterized by a dry matter content of about 12 to 16 weight %, a total acidity of about 0.32 to 0.37 weight % expressed as lactic acid content and a consistency of about 8 to 14 cm/15 s at 20°C.

Considering replacing fermented milk products and/or fruit material in liquid foodstuffs one can propose as preferred fermented material a material having a pH of about 3.5 to 4.0 and further characterized by a dry matter content of about 6 to 8 weight %, a total acidity of about 0.21 to 0.44 weight % expressed as lactic acid content and a consistency of about 18 to 25 cm/15 s at 20°C.

The fermented material which is referred to hereabove has the further advantage not to alter the initial taste and flavour of the food products. Its mild acidity matches quite well with that of fermented milk products; moreover, it has been observed that it does not impart any "floury" or "cooked cereal" taste or like to said food products, even if present in significant proportions.

Again, it will be the task of the man in the art to determine more precisely the organoleptic quality as well as the proportions of fermented material to use for reducing the content of fermented milk products e.g., and to what extent such a reduction can be done to afford food products still acceptable for the consumers.

The following examples only represent an illustration of the present invention but in no way any restriction of same. Temperatures are given in degrees Celsius and proportions in weight percent.

### Example 1

### Preparation of a fermented material suitable for chilled products

### a) Inoculum

A culture medium for a mixture of Lactobacillus and Streptococcus strains was prepared using the following ingredients (parts by weight) :

| | |
|---|---|
| rice flour | 112 |
| manioc starch | 24 |
| wheat flour | 15 |
| sucrose | 7 |
| skimmed milk powder | 7 |
| yeast extract* | 7 |
| distilled water | 750 |

| | |
|---|---|
| * (DIFCO®-0881-01-3) | |

the above mixture being first gelatinized by steam heating, then milled, cooled at room temperature and finally diluted such to have a dry matter content of about 10 %.

Inoculation was effected separately with Lactobacillus strains defined hereafter, according to the standard technique, at a rate of 1% (weight) :

| | |
|---|---|
| Lactobacillus plantarum (ATCC 8041) | 0.5 |
| Lactobacillus plantarum** | 1.0 |
| Lactobacillus casei (ATCC 393) | 1.0 |

| | |
|---|---|
| ** FLORAPAN®L-73 of C. Hansen's Laboratories | |

and then incubated up to achievement of the desired growth rate : 10⁸ to 10⁹ colony forming units per gram of inoculum: final pH 3.5 to 4.1. The separate inoculums were finally combined in a way to achieve the relative proportions defined hereabove.

### b) Fermentation

The following ingredients were mixed in a container suitable for heat treatment (parts expressed in kilograms):

| | |
|---|---|
| rice flour | 112 |
| manioc starch | 24 |
| wheat flour | 15 |
| sucrose | 7 |
| skimmed milk powder | 7 |
| yeast extract | 1 |
| water | 750 |

The above mixture was then injected with steam up to get a temperature of 135°C and further kept at that temperature for 2 min., then mechanically homogenized and finally cooled at approx. 32°C.

The resulting slurry was then transferred into a fermentation tank, then inoculated with the mixture of strains referred to here above at a rate of 1.25 % of liquid inoculum per weight of slurry, and further added with sodium citrate at a rate of 0.04 % weight.

The fermentation took place at 32°C for 8 hours affording to an acidic amylaceous fermented material which was characterized as follows: pH 3.8-4.0; total acidic content 0.42-0.49 % (expressed as weight of lactic acid); dry matter content 14-15 % (weight) and consistency of 13 cm/15 s. at 20°C as defined hereafter. The thus afforded material is a white translucent paste having a smooth structure.

"Consistency" measurement provides a characteristic value of this kind of material which may be compared to the flowing rate of the liquid or semi-liquid material. It consists to measure the unidirectional horizontal move of a sample of material per time unit, in the present case in cm. per 15 s. period (at 20°C e.g.).

The fermented material is particularly suitable for the preparation of chilled products such as yoghurts, fruit desserts, fresh cheese desserts, fruit mousses e.g. It is pasteurized for storage.

### Example 2

### Preparation of a fermented material suitable for infant food

### a) Inoculum

A culture medium for a mixture of Lactobacillus and Streptococcus strains was prepared using the following ingredients (parts by weight) :

| | |
|---|---|
| rice flour | 150 |
| skimmed milk powder | 70 |
| sucrose | 50 |
| calcium monophosphate | 2 |
| yeast extract* | 40 |
| alpha-amylase | 0.2 |
| distilled water | 1000 |

| | |
|---|---|
| *DIFCO®0127-01-7 | |

and subjecting the above mixture to sterilization at approx. 120°C for 15 min.

After cooling, separate portions of the above culture medium were inoculated at a rate of 1 % (weight) with the mixture of strains defined here below:

| | |
|---|---|
| Streptococcus thermophilus (CNCM I-1383) | 0.5 |
| Lactobacillus casei (ATCC 393) | 1.0 |
| Bifidobacterium bifidus (ATCC 29521) | 1.0 |

and then incubated up to achievement of the desired growth rate: 10⁸ to 10⁹ colony forming units per gram of inoculum: final pH 4.2. The separate inoculums were finally combined in a way to achieve the relative proportions defined hereabove.

### b) Fermentation

The following ingredients were mixed in a container suitable for heat treatment (parts expressed in kilograms):

| | |
|---|---|
| rice flour | 114 |
| manioc starch | 25 |
| wheat flour | 15 |
| sucrose | 7 |
| skimmed milk powder | 7 |
| yeast extract | 1.5 |
| water | 750 |

The above mixture was then injected with steam up to get a temperature of 135°C and further kept at that temperature for 2 min., then mechanically homogenized and finally cooled at approx. 35°C.
The resulting slurry was then transferred into a fermented tank, then inoculated with the mixture of strains referred to here above, at a rate of 2.5% of liquid inoculum per weight of slurry, and further added with sodium citrate at a rate of 0.04% weight.

The fermentation took place at 35°C for 8 hours affording to an acidic amylaceous fermented material which was characterized as follows: pH 4.0-4.2; total acidic content 0.32-0.37% (expressed as weight of lactic acid); dry matter content 15 to 16% (weight) and consistency of 10-12 cm/15 s. at 20°C as defined here above. The thus afforded material is a white translucent paste having a smooth structure.

The fermented material is particularly suitable for the preparation of various infant foods such as fruit compote, fresh cheese desserts e.g. It is pasteurized before using.

### Example 3

### Preparation of a fermented material suitable for beverages

The following ingredients were mixed in a container suitable for heat treatment (parts expressed in kilograms):

| | |
|---|---|
| rice flour | 19.8 |
| wheat flour | 15.0 |
| oats flakes | 13.9 |
| sucrose | 24.3 |
| yeast extract | 1.5 |
| water | 850.0 |

The above mixture was then injected with steam up to get a temperature of 130°C and further kept at that temperature for 1 min., and finally cooled at approx. 32°C.

The resulting slurry was then transferred into a fermentation tank, then inoculated with the mixture of strains referred to in Example 1 at a rate of 1.25% of liquid inoculum per weight of slurry, and further added with sodium citrate at a rate of 0.04% weight.

The fermentation took place at 32°C for 8 hours affording to an acidic amylaceous fermented material which was characterized as follows: pH 3.5-3.8; total acidic content 0.35-0.38% (expressed as weight of lactic acid); dry matter content 6.7% (weight) and consistency of 23 cm/15 s. at 20°C as defined here above.

The fermented material is a light brown translucent liquid with small particles visible. It is pasteurized for storage.

### Example 4

### Preparation of a yoghurt/fruit dessert

The following ingredients were used as briefly described here below, applying the conventional techniques.

| | Ingredients | Weight percentage |
|---|---|---|
| I) | Fermented material according to Example 1 | 40 |
| | peach preserves | 16.0 |
| | sucrose | 4.0 |
| | food grade gelatine | 0.2 |
| II) | commercial natural yoghurt | 39.8 |

Preparation : mixing I and heat in a water bath up to 70°C. Cool down to 20°C and add II, mix thoroughly and keep refrigerated.

### Example 5

### Preparation of a fruit (maracuya) mousse

The following ingredients were used as briefly described here below, applying the conventional techniques.

| | Ingredients | Weight percentage |
|---|---|---|
| I) | maracuya pulp (single strength) | 18.333 |
| | sucrose | 8.333 |
| | food grade gelatine | 1.167 |
| II) | fermented material according to Example 1 | 38.833 |
| III) | sweet cream (30% fat) | 13.333 |
| IV) | fresh egg white | 11.667 |
| | sucrose | 8.333 |

Preparation : mixing and heat to 60°C, then add II to the above mixture. Whip III until firm and add to the blend. Whip IV until firm and incorporate gently. Fill in cups, chill thoroughly and keep refrigerated.

### Example 6

### Preparation of an infant fruit and vegetable puree

The following ingredients were used as briefly described here below, applying the conventional techniques.

| Ingredients | Weight percentage |
|---|---|
| Fermented material according to Example 2 | 61.151 |
| carrot purée | 25.180 |
| apple concentrate (24°Brix) | 7.194 |
| sucrose | 6.475 |

Preparation : mix all ingredients and blend at high speed for 1 minute.

### Example 7

### Preparation of a fruit/cereal beverage

The following ingredients were used as briefly described here below, applying the conventional techniques.

| Ingredients | Weight percentage |
|---|---|
| Fermented material according to Example 3 | 76.272 |
| strawberry pulp (6.5°Brix) | 7.397 |
| papaya pulp (10.4°Brix) | 7.276 |
| sucrose | 6.791 |
| banana purée (24°Brix) | 2.122 |
| salt | 0.053 |
| ascorbic acid | 0.053 |
| strawberry aroma | 0.036 |

Preparation : wet mixing the ingredients, then pouring them to colloid milling. Pasteurizing at 102°C for 54 s. and fill aseptically in suitable containers.

### Example 8

### Preparation of a "ketchup" sauce

The following ingredients were used as briefly described here below, applying the conventional techniques.

| Ingredients | Weight percentage |
|---|---|
| Fermented material according to Example 1 | 54.53 |
| sugar syrup (59°Brix) | 23.20 |
| commercial tomato paste | 19.30 |
| salt | 1.35 |
| onion powder | 0.07 |
| allspice | 0.04 |
| food grade caramel colour | 0.05 |
| Griffith emulsion | 0.02 |
| food grade red colour | 0.01 |
| cinnamon powder | 0.01 |
| acetic acid 97% | 1.00 |

Preparation : mix all ingredients together, then heat at 90°C and immediately pour into suitable bottles.

### Information relating to microorganisms

### 1. Streptococcus thermophilus CNCM I-1383

Isolated from a fermented dairy product.

**Morphology**: diplococcus form, frequently grouped as small size chains, no tail. No spore formation observed - Gram positive microorganisms, catalase negative and factultatively anaerobic.

**Fermentation of sugars**: produces lactic acid from Dglucose, lactose and sucrose.

Exhibits texturizing properties through exopolysaccharides production.

Registered on December 8, 1993 in accordance with the rules of the Budapest Convention under No. I-1383 at the Collection Nationale de Cultures de Microorganismes - Institut Pasteur - 28, rue du Docteur Roux F-75724 Paris.

### 2. Lactobacillus casei ATCC 393

Disclosed as registration No. 393 on page 115 of the 1989 Catalog of the American Type Culture Collection 12301 Parklawn Drive - Rockville, Maryland 20852 USA.

### 3. Lactobacillus pentosus ATCC 8041

Disclosed as registration No. 8041 on page 118 of the 1989 Catalog of the American Type Culture Collection 12301 Parklawn Drive - Rockville, Maryland 20852 USA.

### 4. Bifidobacterium bifidum ATCC 29521

Disclosed as registration No. 29521 on page 41 of the 1989 Catalog of the American Type Culture Collection 12301 Parklawn Drive - Rockville, Maryland 20852 USA.

## Claims

1. Process for reducing either simultaneously or separately the content of fermented milk products and/or fruit material in foodstuffs containing fermented milk products and/or fruit material wherein
a) a slurry of cereal flour and at least one additional non-cereal starch material is first subjected to gelatinization and further homogenized;
b) inoculated with an acidifying strain or a mixture of acidifying strains selected from Lactobacillus species, Streptococcus thermophilus and Bifidobacterium species;
c) then subjected to a fermentation over a period and at a temperature such as to afford a pH of about 3.5 to 4.2 of the fermented material;
d) then sterilized; and
e) substituting the above sterilized material for at least one portion of fermented milk product or fruit material during the preparation of the foodstuffs.

2. Process according to claim 1, wherein cereal flour is rice flour, wheat flour, oat flour, barley flour or any mixture thereof.

3. Process according to claims 1 and 2, wherein the noncereal starch material is potato starch or manioc starch.

4. Process according to claims 1 to 3, wherein Lactobacillus species are selected from L. acidophilus, L. casei, L. plantarum, L. delbrueckii, L. brevis, L. Pentosus, L. mesenteroides and L. bulgaricus.

5. Process according to claim 4, wherein the mixture of strains contains two distinct Lactobacillus species, e.g. L. plantarum and L. casei.

6. Process according to claim 4, wherein the mixture of strains contains two distinct subspecies of the same Lactobacillus species, e.g. L. plantarum.

7. Process according to claims 1 to 6, wherein the mixture of strains comprises at least one Lactobacillus species or subspecies and a non-Lactobacillus species.

8. Process according to claims 1 to 7, wherein homogenization of the gelatinized slurry is carried out by wet-milling.

9. Process according to claims 1 to 8 wherein the fermented material has a pH of 3.8 to 4.0 and is further characterized by a dry matter content of 12 to 16 weight %, a total acidity of 0.42 to 0.49 weight % expressed as lactic acid content and a consistency of 13 to 17 cm/15 s at 20°C.

10. Process according to claims 1 to 8 wherein the fermented material has a pH of 4.0 to 4.2 and further characterized by a dry matter content of 12 to 16 weight %, a total acidity of 0.32 to 0.37 weight % expressed as lactic acid content and a consistency of about 8 to 14 cm/15 s at 20°C.

11. Process according to claims 1 to 8 wherein the fermented material has a pH of 3.5 to 4.0 and further characterized by a dry matter content of about 6 to 8 weight %, a total acidity of 0.21 to 0.44 weight % expressed as lactic acid content and a consistency of 18 to 25 cm/15 s at 20°C.

## Patentansprüche

1. Verfahren zur gleichzeitigen oder isolierten Reduzierung des Gehalts an fermentierten Milchprodukten und/oder Früchtematerial in fermentierte Milchprodukte und/oder Früchtematerial enthaltenden Nahrungsmitteln, wobei
a) eine Aufschlämmung von Getreidemehl und mindestens einem zusätzlichen Stärkematerial, das nicht von Getreide abgeleitet ist, gelatinisiert und Weiter homogenisiert wird,
b) mit einem ansäuernden Stamm oder einem Gemisch von ansäuernden Stämmen, ausgewählt unter Lactbacillus-Spezien, Streptococcus thermophilus und Bifidobacterium-Spezien inokuliert wird,
c) über eine Zeitspanne und bei einerTemperatur fermentiert wird, so daß ein pH-Wert des fermentierten Materials von etwa 3,5 bis 4,2 erhalten wird,
d) dann sterilisiert wird, und
e) das vorstehend beschriebene, sterilisierte Material während der Herstellung der Nahrungsmittel mindestens einen Teil fermentierten Milchprodukts oder Früchtematerials ersetzt.

2. Verfahren gemfäß Anspruch 1, wobei das Getreidemehl Reismehl, Weizenmehl, Hafermehl, Gerstenmehl oder jedes Gemisch davon ist.

3. Verfahren gemäß den Ansprüchen 1 und 2, wobei das Stärkematerial, das nicht von Getreide abgeleitet ist, Kartoffelstärke oder Maniokastärke ist.

4. Verfahren gemäß den Ansprüchen 1 bis 3, wobei die Lactobacillus-Spezien ausgewählt werden unter L.acidophilus, L.casei, L.plantarum, L.delbrueckii, L. brevis, L.pentosus, L.mesenteroides und L.bulgaricus.

5. Verfahren gemäß Anspruch 4, wobei das Gemisch der Stämme zwei unterschiedliche Lactobacillus-Spezien, beispielsweise L.plantarum und L.casei, enthält.

6. Verfahren gemäß Anspruch 4, wobei das Gemisch der Stämme zwei unterschiedliche Subspezien der gleichen Lactoacillus-Spezies, beispielsweise L. plantarum, enthält.

7. Verfahren gemäß den Ansprüchen 1 bis 6, wobei das Gemisch der Stämme mindestens eine Lactobacillus-Species oder-Subspecies und eine Species, die nicht Lactobacillus ist, enthält.

8. Verfahren gemäß den Ansprüchen 1 bis 7, wobei die Homogenisierung der gelatinisierten Aufschlämmung durch Naßmahlen durchgeführt wird.

9. Verfahren gemäß den Ansprüchen 1 bis 8, wobei das fermentierte Material einen pH-Wert von 3,8 bis 4,0 aufweist und weiter durch einenTrockensubstanzgehalt von 12 bis 16 Gew.-%, einen Gesamtsäuregehalt von 0,42 bis 0,49 Gew.-%, ausgedrückt als Michsäuregehalt, und eine Konsistenz von 13 bis 17 cm/15 Sek. bei 20⁰C gekennzeichnet ist.

10. Verfahren gemäß den Ansprüchen 1 bis 8, wobei das fermentierte Material einen pH-Wert von 4,0 bis 4,2 aufweist und weiter durch einen Trockensubstauzgehalt von 12 bis 16 Gew.-%, einen Gesamtsäuregehalt von 0,32 bis 0,37 Gew.-%, ausgedrückt als Milchsäuregehalt, und eine Konsistenz von etwa 8 bis 14 cm/15 Sek. bei 20°C gekennzeichnet ist.

11. Verfahren gemäß den Ansprüchen 1 bis 8, wobei das fermentierte Material einen pH-Wert von 3,5 bis 4,0 aufweist und weiter durch einen Trockensubstanzgehalt von 6 bis 8 Gew.-%, einen Gesamtsäuregehalt von 0,21 bis 0,44 Gew.-%, ausgedrückt als Milchsäuregehalt, und eine Konsistenz von 18 bis 25 cm/15 Sek. bei 20⁰C gekennzeichnet ist.

## Revendications

1. Procédé pour réduire simultanément ou séparément la quantité de produits laitiers fermentés et/ou de fruits dans des denrées alimentaires contenant des produits laitiers fermentés et/ou des fruits, dans lequel
a) une suspension d'une farine de céréales et d'au moins une matière amylacée supplémentaire non dérivée de céréales est tout d'abord soumise à une gélatinisation et est ensuite homogénéisée ;
b) est ensemencée avec une souche acidifiante ou un mélange de souches acidifiantes choisies parmi des espèces du genre Lactobacillus, Streptococcus thermophilus et des espèces du genre Bifidobacterium ;
c) puis est soumise à une fermentation pendant une période de temps et à une température telles qu'un pH d'environ 3,5 à 4,2 de la matière fermentée soit atteint ;
d) puis est stérilisée ; et
e) la matière stérilisée précitée est utilisée pour remplacer au moins une partie du produit laitier fermenté ou des fruits au cours de la préparation des denrées alimentaires.

2. Procédé suivant la revendication 1, dans lequel la farine de céréales consiste en farine de riz, farine de blé, farine d'avoine, farine d'orge ou n'importe lequel de leurs mélanges.

3. Procédé suivant les revendications 1 et 2, dans lequel la matière amylacée non dérivée de céréales consiste en fécule de pomme de terre ou fécule de manioc.

4. Procédé suivant les revendications 1 à 3, dans lequel les espèces du genre Lactobacillus sont choisies entre L. acidophilus, L. casei, L. plantarum, L. delbrueckii, L. brevis, L. pentosus, L. mesenteroides et L. bulgaricus.

5. Procédé suivant la revendication 4, dans lequel le mélange de souches contient deux espèces de Lactobacillus distinctes, par exemple L. plantarum et L. casei.

6. Procédé suivant la revendication 4, dans lequel le mélange de souches contient deux sous-espèces distinctes de la même espèce de Lactobacillus, par exemple L. plantarum.

7. Procédé suivant les revendications 1 à 6, dans lequel le mélange de souches comprend au moins une espèce ou sous-espèce de Lactobacillus et une espèce n'appartenant pas au genre Lactobacillus.

8. Procédé suivant les revendications 1 à 7, dans lequel l'homogénéisation de la suspension gélatinisée est effectuée par broyage humide.

9. Procédé suivant les revendications 1 à 8, dans lequel la matière fermentée a un pH de 3,8 à 4,0 et est caractérisée en outre par une teneur en matière sèche de 12 à 16 % en poids, une acidité totale de 0,42 à 0,49 % en poids exprimée par la teneur en acide lactique et une consistance de 13 à 17 cm/15 s à 20°C.

10. Procédé suivant les revendications 1 à 8, dans lequel la matière fermentée a un pH de 4,0 à 4,2 et est caractérisée en outre par une teneur en matière sèche de 12 à 16 % en poids, une acidité totale de 0,32 à 0,37 % en poids exprimée par la teneur en acide lactique et une consistance d'environ 8 à 14 cm/15 s à 20°C.

11. Procédé suivant les revendications 1 à 8, dans lequel la matière fermentée a un pH de 3,5 à 4,0 et est caractérisée en outre par une teneur en matière sèche d'environ 6 à 8 % en poids, une acidité totale de 0,21 à 0,44 % en poids exprimée par la teneur en acide lactique et une consistance de 18 à 25 cm/15 s à 20°C.
